(19) Europäisches Patentamt
European Patent Office
Office européen des brevets

(11) **EP 2 151 666 A1**

(12) **EUROPEAN PATENT APPLICATION**
published in accordance with Art. 153(4) EPC

(43) Date of publication:
**10.02.2010 Bulletin 2010/06**

(51) Int Cl.:
*G01B 9/02* (2006.01)          *G01B 11/02* (2006.01)
*G01S 17/32* (2006.01)

(21) Application number: **08751804.9**

(22) Date of filing: **23.05.2008**

(86) International application number:
**PCT/JP2008/001295**

(87) International publication number:
**WO 2008/146480 (04.12.2008 Gazette 2008/49)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **25.05.2007  JP 2007138524**

(71) Applicant: **Nikon Corporation
Tokyo 100-8331 (JP)**

(72) Inventor: **TAKAHASHI, Akira
Tokyo 100-8331 (JP)**

(74) Representative: **Zeitler - Volpert - Kandlbinder
Herrnstrasse 44
80539 München (DE)**

(54) **LENGTH MEASURING APPARATUS**

(57)    The present invention relates to an optical length measuring apparatus using a laser beam, and has a proposition to enable highly accurate measuring. There includes a length measuring section measuring a distance to a subject and having a measuring laser beam source, a calibration laser beam source emitting a laser beam having a wavelength stability higher than that of a laser beam of the measuring laser beam source, an interference optical system bringing the laser beam of the measuring laser beam source and the laser beam of the calibration laser beam source into interference, and an arithmetic processing section performing a calculation of the distance based on an output of the interference optical system and an output of the length measuring section.

Fig.1

**Description**

TECHNICAL FIELD

The present invention relates to an optical length measuring apparatus using a laser beam.

BACKGROUND ART

As a length measuring apparatus, there has been known an apparatus including, for example, a moving stage that is movable in a measuring direction of a subject, an edge detecting optical system provided on this moving stage and detecting an edge of the subject, a laser beam source emitting a laser beam, a laser interferometer detecting a moving amount of the moving stage based on the laser beam from the laser beam source, which is reflected on a movable mirror provided on the moving stage, and so on (Patent Document 1).

Patent Document 1: Japanese Patent No. 3418234

DISCLOSURE OF THE INVENTION

PROBLEMS TO BE SOLVED BY THE INVENTION

In optical length measuring apparatuses including the above-described length measuring apparatus, a Zeeman wavelength stabilized laser is normally used as a laser beam source, and a wavelength stability thereof is approximately $1 \times 10^{-8}$.

Accordingly, in a length measuring apparatus in which this Zeeman wavelength stabilized laser is used, there is no chance that inaccuracy in measuring a length increases over $1 \times 10^{-8}$. For example, when measuring a standard scale of 1 m, accuracy that is approximately $1 \text{ m} \times 1 \times 10^{-8} = 10$ nm is a limit.

In place of the Zeeman wavelength stabilized laser, using an iodine stabilized laser having a wavelength stability, which is, for example, $2 \times 10^{-12}$ more excellent than that of the Zeeman wavelength stabilized laser, is considered, but it is said that this iodine stabilized laser has small optical power, and is unsuitable for a moving subject, and further, optical interference is not excellent, resulting that it is very difficult for the iodine stabilized laser to be used in measuring.

A proposition of the present invention is to provide an optical length measuring apparatus enabling highly accurate measuring.

MEANS FOR SOLVING THE PROBLEMS

A length measuring apparatus of a first invention includes a length measuring section measuring a distance to a subject and having a measuring laser beam source, a calibration laser beam source emitting a laser beam having a wavelength stability higher than that of a laser beam of the measuring laser beam source, an interference optical system bringing the laser beam of the measuring laser beam source and the laser beam of the calibration laser beam source into interference, and an arithmetic processing section performing a calculation of the distance based on an output of the interference optical system and an output of the length measuring section.

In a length measuring apparatus of a second invention, the calibration laser beam source is an iodine stabilized laser beam source.

In a length measuring apparatus of a third invention, the output of the interference optical system is a frequency difference between the laser beam of the measuring laser beam source and the laser beam of the calibration laser beam source, and the arithmetic processing section calculates a wavelength of the laser beam of the measuring laser beam source from the frequency difference, and calculates the distance from the output of the length measuring section based on a calculation result of the wavelength.

A length measuring apparatus of a fourth invention includes a display section displaying information based on the distance obtained by the calculation in the arithmetic processing section.

In a length measuring apparatus of a fifth invention, the interference optical system brings the laser beam of the measuring laser beam source and the laser beam of the calibration laser beam source into interference when the length measuring section measures the distance, and the arithmetic processing section calculates the distance based on the output of the interference optical system and the output of the length measuring section when the length measuring section measures the distance.

EFFECT OF THE INVENTION

According to the present invention, highly accurate measuring becomes possible.

BRIEF DESCRIPTION OF THE DRAWINGS

Fig. 1 is a schematic diagram showing one embodiment of a length measuring apparatus of the present invention.
Fig. 2 is an explanatory diagram showing one example of a wavelength correction.
Fig. 3 is an explanatory diagram showing another example of a wavelength correction.

BEST MODE FOR CARRYING OUT THE INVENTION

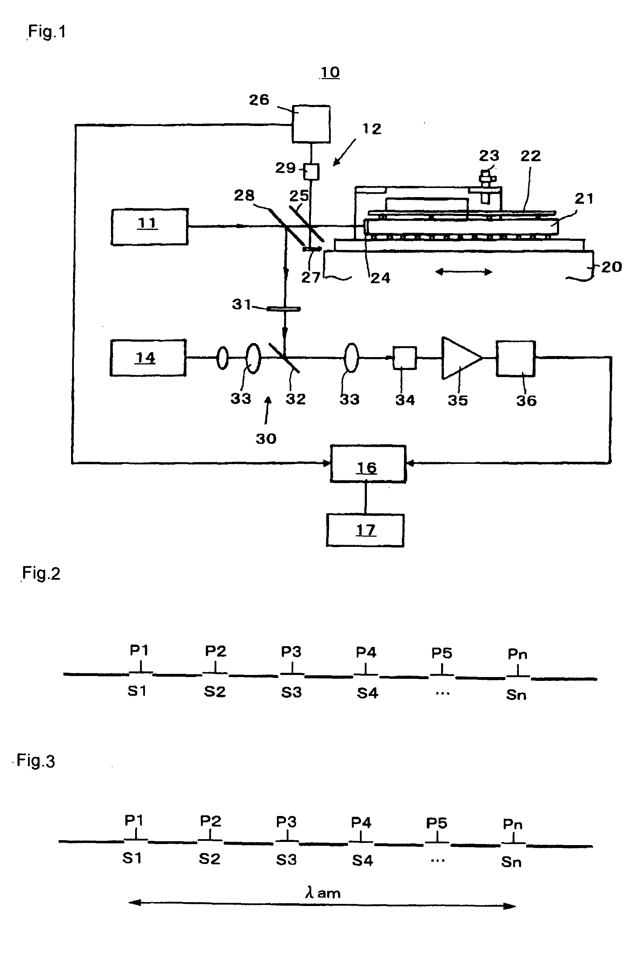

Hereinafter, a length measuring apparatus of the present invention will be explained with reference to Fig. 1.
Fig. 1 is a schematic diagram of one embodiment of the length measuring apparatus of the present invention. As shown in Fig. 1, a length measuring apparatus 10 includes a Zeeman laser beam source 11 as a measuring laser beam source, a length measuring apparatus body 12 as a length measuring section irradiating a subject (a moving table 21) with a laser beam of this Zeeman laser beam source 11 to measure a distance to the subject, an iodine stabilized laser beam source 14 as a calibration laser beam source emitting a laser beam having a wavelength stability higher than that of the laser beam of the Zeeman laser beam source 11, an interference optical system (a half mirror 32, a detector 34) bringing the laser beam of the Zeeman laser beam source 11 and the laser beam of the iodine stabilized laser beam source 14 into interference, and an arithmetic processing section 16 calculating the distance based on output of the interference optical system (output of the detector 34) and output of the length measuring apparatus body 12 (a counter 26).
In the length measuring apparatus body 12, a bed 20 and the moving table 21 as a subject equipped on this bed 20 so as to move in an arrow direction in the drawing (a right and left direction in Fig. 1) by a not-shown moving mechanism are disposed.
In measuring, on the moving table 21, a standard scale 22 for measuring is fixed in a moving direction of the moving table 21. The moving table 21 is sent in the right and left direction in the drawing, and a graduation imprinted on the standard scale 22 for measuring is detected by a microscope 23 for graduation lines.
At one end of the moving table 21, in order to measure a sent distance of the moving table 21, a reflecting mirror 24 reflecting the laser beam from the Zeeman laser beam source 11 is equipped.
Note that in the length measuring apparatus body 12, the standard scale 22 and the microscope 23 for graduation lines that are described above are equipped.
A half mirror 25 is disposed in a beam path between the Zeeman laser beam source 11 and the moving table 21, and the laser beam from the Zeeman laser beam source 11 is intensity-divided into two by this half mirror 25.
The laser beam divided by being transmitted through the half mirror 25 is irradiated to the reflecting mirror 24. A reflected beam reflected on this reflecting mirror 24 returns to the half mirror 25, and a beam reflected on this half mirror 25 and a beam reflected from a reference mirror 27 interfere. Then, a beam made from the interference is incident on a photodetector 29 and converted into an electrical signal, and coordinates of the moving table 21 are measured by the counter 26.
Besides a frequency signal of the reflected beam, a frequency signal of a direct beam from the Zeeman laser beam source 11, which is converted into an electrical signal by a not-shown photodetector, is input to the counter 26. In the counter 26, a phase difference between the direct beam and the reflected beam is obtained from this frequency signal of the direct beam and the frequency signal of the reflected beam, and this phase difference information (sent distance information of the moving table 21) is output to the arithmetic processing section 16.
The laser beam from the Zeeman laser beam source 11, which is reflected on a half mirror 28 and divided, travels toward a calibration optical system 30 including the iodine stabilized laser beam source 14 and the interference optical system (the half mirror 32, the detector 34) via a wavelength plate 31. The wavelength plate 31 is to adjust a plane of polarization of a beam. The laser beam from the Zeeman laser beam source 11 reflected on the half mirror 28 has a plane of polarization thereof adjusted on the wavelength plate 31 and then reaches the half mirror 32 included in the interference optical system disposed in the calibration optical system 30.
The laser beam from the iodine stabilized laser beam source 14 passes through a beam expander 33, and in this beam expander 33, is adjusted to have approximately the same beam diameter as that of the laser beam from the Zeeman laser beam source 11. Then, the beam from the iodine stabilized laser beam source 14 similarly reaches the half mirror 32.
The laser beam from the iodine stabilized laser beam source 14 passes through the half mirror 32. On the other hand, the laser beam from the Zeeman laser beam source 11 is reflected on the half mirror 32, and the laser beam from the Zeeman laser beam source 11 and the laser beam from the iodine stabilized laser beam source 14 interfere with each other by this half mirror 32 to travel toward a collecting lens 33 side together. The both beams that interfere are condensed onto a detecting surface of the detector (for example, an avalanche photodiode) 34 via the collecting lens 33.

In the detector 34, the incident beam is converted into an electrical signal to be output. When a frequency of the laser beam from the Zeeman laser beam source 11 is set as Va, and a frequency of the laser beam from the iodine stabilized laser beam source 14 is set as Vi, a frequency of the electrical signal output from the detector 34 (the output of the interference optical system) becomes Vi - Va, which is a difference between the frequencies of the both laser beams. Vi - Va is represented by Vb, and is referred as a beat signal. This beat signal Vb is amplified by a wide band amplifier 35 to be input to a frequency counter 36, and then a signal frequency is counted therein, and then, a wavelength λa of the Zeeman laser beam source 11 is obtained by the arithmetic processing section 16.

That is as below.

$$Vb = |\ Va - Vi\ |$$

Here, when it is assumed that the frequency Vi of the iodine laser beam is always higher than the frequency Va of the Zeeman laser beam, it is possible to express as Va = Vi - Vb (Hz).

A beam velocity in a vacuum is C = 299792458 (m/s), and therefore, the wavelength λa of the Zeeman laser beam becomes as below.

$$\lambda a = C/Va = 299792458/(Vi - Vb)$$

Information of the wavelength λa of the Zeeman laser beam expressed by the frequency Vb of the beat signal and the frequency Vi of the iodine laser beam is output to the arithmetic processing section 16.

In the arithmetic processing section 16, by using the information of the wavelength λa of the Zeeman laser beam expressed by the frequency Vb of the beat signal and the frequency Vi of the iodine laser beam, arithmetic processing is performed for the sent distance information of the moving table 21 being the output of the length measuring apparatus body 12, and then, an interval between graduation lines of the standard scale 22 is obtained from this sent distance information of the moving table 21.

An arithmetic processing result of the arithmetic processing section 16 can be displayed on a display section 17 according to need. On the display section 17, for example, a nominal value and a measured value of the interval between the graduation lines are displayed in line. Further, while the nominal value and the measured value are displayed on the display section 17, it is also possible to print the nominal value and the measured value by a not-shown printer.

When the measuring is performed only with the laser beam from the Zeeman laser beam source 11 without using the laser beam from the iodine stabilized laser beam source 14, a wavelength stability of the laser beam from the Zeeman laser beam source 11 is approximately $1 \times 10^{-8}$, and therefore, inaccuracy in measuring a graduation position of the standard scale 22 results in approximately $1 \times 10^{-8}$. However, as described in this embodiment, when the laser beam from the iodine stabilized laser beam source 14 is used to obtain the wavelength λa of the Zeeman laser beam with the frequency Vb of the beat signal and the frequency Vi of the iodine laser beam, inaccuracy in measuring a graduation position of the standard scale 22 is greatly improved to approximately $2 \times 10^{-12}$ since a wavelength stability of the iodine laser beam is $2 \times 10^{-12}$.

Further, if the iodine laser beam is directly irradiated to the reflecting mirror 24 of the moving table 21 and reflected, instead of measuring the sent distance of the moving table 21, the sent distance information of the moving table 21 obtained by using the Zeeman laser beam is obtained by using the frequency Vi of the iodine laser beam and so son and by performing arithmetic processing. Thereby, problems caused by using the iodine laser beam (power is small, it is unsuitable for a moving subject, and interference is not good) do not exist, resulting that highly accurate measuring becomes possible.

In this embodiment, the case when the iodine laser beam is used as a laser beam having a stability higher than that of the Zeeman laser beam as a measuring laser beam is described, but this embodiment is not limited to the above.

Further, in this embodiment, the case when the signal frequency of the beat signal Vb is counted simultaneously with measuring a graduation position of the standard scale 22, and the wavelength λa of the Zeeman laser beam source 11 is obtained by the calculation with the beat signal Vb and the frequency Vi of the iodine laser beam is described, but the wavelength λa of the Zeeman laser beam source 11 may be calculated with the beat signal Vb and the frequency Vi of the iodine laser beam after, for example, a graduation position of the standard scale 22 is measured. Further, after the wavelength $\lambda a$ of the Zeeman laser beam source 11 is calculated with the beat signal Vb and the frequency Vi of the iodine laser beam, a graduation position of the standard scale 22 may be measured.

Fig. 2 is a diagram for explaining details of a wavelength correction in the case when the signal frequency of the beat signal Vb is counted simultaneously with measuring a graduation position of the standard scale 22, and the wavelength $\lambda a$ of the Zeeman laser beam source 11 is obtained by the calculation with the beat signal Vb and the frequency Vi of the iodine laser beam.

In this method, every time a graduation (S1, S2 ..., Sn) of the standard scale 22 shown in Fig. 2 is measured, the wavelength $\lambda a$ of the Zeeman laser beam source 11 is corrected.

That is, a wavelength of the Zeeman laser beam source 11 when measuring the graduation S1 is set as $\lambda\text{-}a1$, and similarly, wavelengths when measuring the graduations S2, ..., Sn are set as $\lambda a2$, ..., $\lambda an$. Further, position measuring results of the graduations S1, S2 ..., Sn prior to a wavelength correction are set as P1, P2, ..., Pn. Here, the position measuring result prior to a wavelength correction indicates a measured value in which a nominal value $\lambda a0$ of a wavelength of the Zeeman laser beam source 11 is used. For example, when a wavelength correction is not performed, an interval between the graduation S1 and the graduation S2 is P2 - P1.

On the other hand, when a wavelength correction is considered, the position of the graduation S1 is P1, and the wavelength of the Zeeman laser beam source 11 at this moment is $\lambda a1$. Thus, a position P'1 obtained after the wavelength correction is performed is expressed by the following expression.

$$P'1 = P1 \times \lambda a1 / \lambda a0$$

Similarly, as for the graduation S2, its position is expressed as $P'2 = P2 \times \lambda a2/\lambda a0$.

Thus, the interval between the graduation S1 and the graduation S2 obtained after the wavelength correction is performed is expressed as below.

$$P'2 - P'1 = P2 \times \lambda a2 / \lambda a0 - P1 \times \lambda a1 / \lambda a0$$

Fig. 3 is a diagram for explaining an example where a wavelength correction is performed by using an average value $\lambda am$ of the wavelength $\lambda a$ of the Zeeman laser beam source 11 after a graduation position of the standard scale 22 is measured.

In this method, the wavelength $\lambda a$ of the Zeeman laser beam source 11 is averaged, and thereby, the average value $\lambda am$ is obtained while the time when the graduation (S1, S2..., Sn) of the standard scale 22 shown in Fig. 3 is measured.

Then, the position P'1 obtained after the wavelength correction is performed is expressed by the following expression.

$$P'1 = P1 \times \lambda am / \lambda a0$$

Similarly, as for the graduation S2, its position is expressed as $P'2 = P2 \times \lambda am/\lambda a0$.

Thus, the interval between the graduation S1 and the graduation S2 obtained after the wavelength correction is performed is expressed as below.

$$P'2 - P'1 = P2 \times \lambda am / \lambda a0 - P1 \times \lambda am / \lambda a0$$

$$= (P2 - P1) \times \lambda am / \lambda a0$$

**Claims**

1. A length measuring apparatus comprising:

a length measuring section having a measuring laser beam source and measuring a distance to a subject based on a beam from the measuring laser beam source being reflected from the subject and a beam from the measuring laser beam source being reflected from a reference mirror arranged in fixed manner;
a calibration laser beam source emitting a laser beam having a wavelength stability higher than a wavelength stability of a laser beam of the measuring laser beam source;
an interference optical system bringing the laser beam of the measuring laser beam source and the laser beam of the calibration laser beam source into interference; and
an arithmetic processing section calculating the distance based on an output of the interference optical system and an output of the length measuring section.

2. The length measuring apparatus according to claim 1, wherein
the calibration laser beam source is an iodine stabilized laser beam source.

3. The length measuring apparatus according to claim 1 or 2, wherein
the output of the interference optical system is a frequency difference between the laser beam of the measuring laser beam source and the laser beam of the calibration laser beam source, and
the arithmetic processing section calculates a wavelength of the laser beam of the measuring laser beam source from the frequency difference, and calculates the distance from the output of the length measuring section based on a calculation result of the wavelength.

4. The length measuring apparatus according to any one of claims 1 to 3, further comprising:

a display section displaying information based on the distance obtained by the calculation in the arithmetic processing section.

5. The length measuring apparatus according to any one of claims 1 to 4, wherein
the interference optical system brings the laser beam of the measuring laser beam source and the laser beam of the calibration laser beam source into interference when the length measuring section measures the distance, and
the arithmetic processing section calculates the distance based on the output of the interference optical system and the output of the length measuring section when the length measuring section measures the distance.

Fig.1

Fig.2

Fig.3

$\lambda$ am

| **INTERNATIONAL SEARCH REPORT** | International application No. |
|---|---|
| | PCT/JP2008/001295 |

**A. CLASSIFICATION OF SUBJECT MATTER**
*G01B9/02*(2006.01)i, *G01B11/02*(2006.01)i, *G01S17/32*(2006.01)i

According to International Patent Classification (IPC) or to both national classification and IPC

**B. FIELDS SEARCHED**

Minimum documentation searched (classification system followed by classification symbols)
G01B9/02, G01B11/02, G01S17/32

Documentation searched other than minimum documentation to the extent that such documents are included in the fields searched
Jitsuyo Shinan Koho          1922-1996   Jitsuyo Shinan Toroku Koho    1996-2008
Kokai Jitsuyo Shinan Koho    1971-2008   Toroku Jitsuyo Shinan Koho    1994-2008

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 11-125504 A  (Mitsutoyo Corp.),<br>11 May, 1999 (11.05.99),<br>Par. Nos. [0006] to [0012]; Fig. 5<br>(Family: none) | 1-5 |

☐ Further documents are listed in the continuation of Box C.          ☐ See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 05 August, 2008 (05.08.08) | 12 August, 2008 (12.08.08) |

| Name and mailing address of the ISA/<br>    Japanese Patent Office | Authorized officer |
|---|---|
| Facsimile No. | Telephone No. |

Form PCT/ISA/210 (second sheet) (April 2007)

**EP 2 151 666 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3418234 B